Europäisches Patentamt

European Patent Office

Office européen des brevets

(19)

(11) Publication number: 0 164 606
A2

## (12) EUROPEAN PATENT APPLICATION

(21) Application number: 85106080.6

(22) Date of filing: 17.05.85

(51) Int. Cl.⁴: B 29 C 67/22

(30) Priority: 12.06.84 GB 8414970

(43) Date of publication of application:
18.12.85 Bulletin 85/51

(84) Designated Contracting States:
BE FR NL

(71) Applicant: DUNLOP LIMITED
St. James's House 23-24 King Street
London SW1Y 6RA(GB)

(72) Inventor: Wood, Kenneth
2 Summerbridge Crescent Ecclesshill
Bradford BD10 8BB West Yorkshire(GB)

(72) Inventor: Walton, Trevor John
391 Wilnecote Lane
Tamworth Staffordshire B77 2LY(GB)

(74) Representative: Moore, John Hamilton et al,
Group Patent Department Dunlop Limited P.O. Box 504
Erdington Birmingham B24 9QH(GB)

(54) Impregnated cellular articles.

(57) Uniform impregnation of a cellular (e.g. foam) article with a flame-retardant substance is obtained by providing the article, prior to impregnation, with a plurality of holes or cavities extending through or part-way through the shortest dimension of the article and being uniformly distributed over a principal surface area thereof. This method is of particular value where the articles to be impregnated have a thickness greater than about 4cm.

EP 0 164 606 A2

1.

## IMPREGNATED CELLULAR ARTICLES

This invention relates to impregnated cellular articles and in particular to an improved method for impregnating cellular articles with a flame-retardant medium.

Cellular materials, especially foams, are widely used as upholstery and bedding components. Since such materials are often inherently flammable and decompose in a fire situation with the emission of toxic products of combustion, it is well known to those skilled in the art that some treatment of these materials is necessary to render them flame-retardant. Moreover, many countries have introduced legislation to provide a minimum standard of flame-retardancy in such materials.

Our UK Patents 1.519.795 and 1.589.858 disclose foamed upholstery components which have been rendered flame-retardant by impregnating the foam materials with, for example, a hydrated aluminium compound in a latex-based carrier.

We have found that although satisfactory uniform impregnation of the foam material can be achieved when the thickness of the material to be impregnated does not exceed around 4 cm, the impregnation of thicker foam articles requires a considerable input of labour and skill if the impregnation is to be uniform and if drying of the impregnated foam is to be effective. For example, impregnation of a 10 cm thick foam article with a latex dispersion of gibbsite results in non-uniform impregnation even after repeated compression and relaxation of the foam whilst the foam is totally submerged in the dispersion. Drying requires upwards of 8 hours at elevated temperature.

The more exacting standards for flame-retardancy now being set by the UK Crown Suppliers (e.g. F.T.S.No.15), require full-depth flame-retardant foam. Because of the difficulty of uniformly impregnating and effectively drying a cellular article of thickness greater than about 4 cm, it has been the practice to achieve the required thickness of flame-retardant foam by laminating together several thinner layers of foam, each layer having previously been impregnated and dried. This procedure, too, is costly and labour-intensive and the increased costs of manufacture are inevitably reflected in the selling price of the products.

It has now been found that uniform impregnation and effective drying of a cellular article having a thickness greater than 4 cm can be achieved according to the present invention by providing the cellular article prior to impregnation, with a plurality of holes or cavities.

For example, a commonly-employed thickness for a foam mattress is 10 cm and we have found that impregnation of a 10 cm-thick foam article can readily be achieved by means of the method of the present invention.

Accordingly, the present invention provides a method of impregnating an article of a cellular material, in which, prior to impregnation, the said article is provided with a plurality of holes or cavities.

The present invention also provides an impregnated cellular article made according to the method disclosed in the immediately-preceding paragraph.

Preferably, the holes or cavities extend along the shortest dimension of the cellular article and are distributed over a principal surface area of the article.

In one embodiment of the present invention, the holes or cavities may extend through the shortest dimension of the cellular article from one principal surface to the other.

In a second embodiment, the holes or cavities may extend part-way through the shortest dimension of the cellular article, opening at one of the principal surfaces. Alternatively, two sets of holes or cavities

may be provided, each set extending from one of the principal surfaces and part-way through the shortest dimension of the article.

Preferably, the said two sets of holes or cavities are off-set relative to each other.

The cellular material suitably comprises a flexible foam, especially a flexible polyurethane foam.

The holes or cavities can be obtained by fabrication of an already-produced cellular article.

Alternatively, the cellular article can be moulded so as to include the holes or cavities.

A suitable distribution of holes or cavities in a block of cellular material having dimensions 90 x 190 x 10 cm is the provision of holes or cavities having a diameter of from 4 to 25 mm (preferably around 10 mm). The holes or cavities are so disposed relative to one another that the distance between any portion of the cellular material and the periphery of a hole or cavity does not exceed 40 mm, preferably about 20 mm.

We have found that the drying time of such a block (when compared to a similar block without holes or cavities) can be reduced, according to the present invention, by one-third to one-half. Moreover, the uniformity of impregnation is considerably improved, thus eliminating the need to fabricate blocks of 10 cm thickness and upwards by a costly lamination method.

The present invention will be illustrated, merely by way of example, as follows :

EXAMPLE

A block of a flexible polyetherurethane foam having a density of 20 $Kg/m^3$ and dimensions 90 x 190 x 10 cm was provided by fabrication with a plurality of through-holes, the holes being uniformly distributed over the entire surface of the block. Each hole was of average diameter 10 mm and arranged in rectangular pitch, extending through the shortest dimension of the block. The distance between adjacent centres was 30 mm, whereby no part of the foam was more than about 16 mm from the periphery of a hole. The drilled block was impregnated with a flame-retardant medium comprising a hydrated aluminium compound in a suitable latex binder. The impregnated block was then passed through the nip of a pair of rollers to remove excess impregnant before being dried for 2 hours 20 minutes at 100°C.

A second foam block, identical with the first except for the through-holes, was impregnated with the same flame-retardant medium.

The drying stage took 8 hours at 100°C.

It is to be understood that the method of the present invention is applicable to all types of flexible impregnated cellular material.

CLAIMS:

1.    A method of uniformly impregnating an article made of a cellular material, characterised in that said article is provided, prior to impregnation, with a plurality of holes or cavities, the holes or cavities extending along the shortest dimension and being distributed over a principal surface area of said cellular article.

2.    A method according to Claim 1, characterised in that the holes or cavities extend through the shortest dimension of the cellular article from one principal surface to the other.

3.    A method according to Claim 1, characterised in that the holes or cavities extend part-way through the shortest dimension of the cellular article and open at one of the principal surfaces of said article.

4.    A method according to Claim 3, characterised in that two sets of holes or cavities are provided, each set extending from one of the principal surfaces of the cellular article and part-way through its shortest dimension.

5.    A method according to Claim 4, characterised in that the two sets of holes or cavities are off-set relative to each other.

6.    A method according to any one of Claims 1 to 5, characterised in that the holes or cavities are produced by fabrication of the cellular article, e.g. by drilling.

7.    A method according to any one of Claims 1 to 5, characterised in that the holes or cavities are produced by moulding.

8.    A method according to any one of the preceding claims, characterised in that the diameter of the holes or cavities is in the range 4mm to 25mm.

9.    A method according to any one of the preceding claims, characterised in that the holes or cavities are so disposed relative to one another that the distance between any portion of the cellular material and the periphery of a hole or cavity does not exceed 40mm (and preferably does not exceed 20mm).

10.    A method according to any one of the preceding

6.

claims, <u>characterised in that</u> the cellular material is a flexible foam, e.g. a flexible polyurethane foam.

CDK/MEB - DP 10330